# DEMANDE DE BREVET EUROPEEN

(11) **EP 2 312 765 A1**
(43) Date de publication de la demande: **20.04.2011**
(21) Numéro de dépôt: 10187335.4
(22) Date de dépôt: 12.10.2010
(51) Int. Cl.: H04B 7/08, H04H 40/90, H04B 1/18, H04B 7/04

(54) **Module de réception de plusieurs signaux de satellite**

(30) Priorité: 13.10.2009 FR 0957169
(71) Demandeur: STMicroelectronics SA, 92120 Montrouge (FR)
(72) Inventeur: Busson, Pierre, 38000, Grenoble (FR)
(74) Mandataire: de Beaumont, Michel

(57) **Abrégé**

L'invention concerne un module de réception de satellite pour recevoir une pluralité de signaux de satellite, le module de réception de satellite comprenant : une pluralité de blocs à faible bruit (202, 204) chacun étant destiné à recevoir un ou plusieurs des signaux de satellite et à fournir ainsi un signal reçu, au moins un des blocs recevant une pluralité de signaux de satellite ; et un module de traitement de signal de satellite (206) comprenant : une pluralité de branches (A, B, C) chacune étant disposée pour recevoir l'un correspondant des signaux reçus à partir de la pluralité de blocs à faible bruit, chaque branche comprenant un multiplieur (222A, 222B, 222C) disposé pour pondérer le signal reçu en le multipliant par un coefficient correspondant (C0, C1, C2) ; et un additionneur (224) disposé pour ajouter les signaux pondérés de chaque branche pour produire un signal de satellite de sortie.

## Description

### Domaine de l'invention

La présente invention concerne un module récepteur pour la réception de plusieurs signaux de satellite et en particulier un module récepteur pour extraire un signal de satellite choisi d'une pluralité de signaux de satellite reçus par une pluralité de blocs à faible bruit.

### Exposé de l'art antérieur

Un module de réception de satellite, par exemple le module souvent appelé module externe, comprend un ou plusieurs blocs à faible bruit (LNB - Low Noise Blocks) dont chacun est disposé pour amplifier un signal de satellite reçu par une antenne parabolique. Le signal de satellite transporte par exemple des données audio et/ou vidéo, tel que des signaux de télévision ou des signaux radio. Chaque bloc LNB est conçu pour introduire aussi peu de bruit que possible, c'est-à-dire typiquement de l'ordre de 1 décibel.

Le signal de satellite tel que reçu par le bloc LNB est modulé sur un signal de porteuse, par exemple dans une bande de fréquence de 10,4 à 12,7 GHz. Dans cette bande de fréquence, il y a plusieurs canaux dont chacun correspond à un flux de données particulier qui peut comprendre des données vidéo et/ou audio d'une ou plusieurs émissions de télévision et/ou de radio. La largeur de bande de chaque canal est typiquement comprise entre 8 et 30 MHz.

On a proposé des modules de réception de satellite qui peuvent recevoir des signaux de plusieurs satellites.

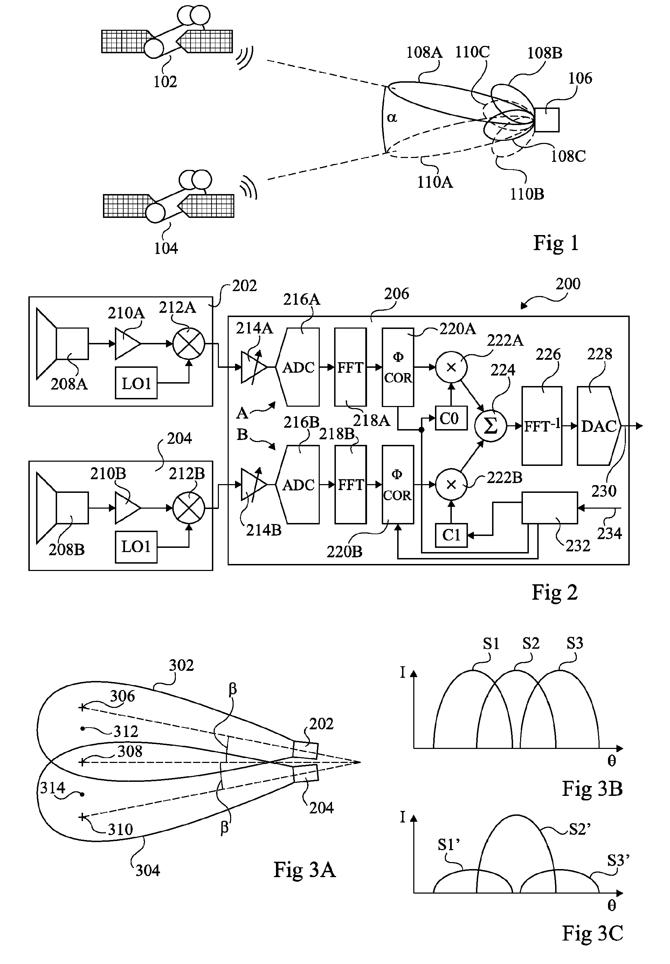

La figure 1 représente une partie d'un système de satellites comprenant des satellites 102, 104, dont chacun est en orbite géostationnaire et émet un signal de satellite. Le signal de satellite de chacun des satellites est par exemple dans la bande de 10,4 à 12,7 GHz. Un module de réception 106 pour recevoir un ou plusieurs signaux de satellite comprend par exemple une paire de blocs LNB dont chacun est destiné à l'un correspondant des satellites. L'un des blocs LNB a par exemple une distribution en intensité de réception correspondant à un lobe frontal 108A et à des lobes latéraux 108B et 108C ; l'autre bloc LNB a une distribution en intensité de réception illustrée par un lobe frontal 110A et des lobes latéraux 110B et 110C.

Pour que chacun des blocs LNB puisse recevoir correctement un signal de satellite d'un satellite correspondant, les satellites 102 et 104 sont séparés d'une distance angulaire au moins égale à un angle α par rapport au module de réception de satellite 106. L'angle α est généralement de l'ordre de 6 degrés. Par exemple, en France, le satellite Astra19 est disposé à la longitude 19°E, et le satellite Hotbird est positionné à la longitude 13°E, ce qui laisse entre eux un angle de longitude de 6° pour qu'un seul récepteur de satellite puisse distinguer les signaux.

Les satellites de transmission de télévision sont généralement disposés sur des orbites géostationnaires au dessus de l'équateur. Le fait que les satellites doivent être écartés de 6 degrés entraine qu'il existe un espace limité pour les satellites dans cette région. Pour fournir plus de services, il serait avantageux de pouvoir lancer plus de satellites plus proches les uns des autres. Toutefois, un problème est que les modules de réception de satellite connus ne sont généralement pas adaptés à recevoir correctement des signaux de satellite à moins de 6 degrés les uns des autres.

### Résumé

Un objet des modes de réalisation décrits ici est de traiter au moins partiellement un ou plusieurs des problèmes de l'art antérieur.

Selon un aspect de la présente invention, il est prévu un module de réception de satellite pour recevoir une pluralité de signaux de satellite d'une pluralité de satellites, le module de réception de satellite comprenant : une pluralité de blocs à faible bruit chacun étant destiné à recevoir un ou plusieurs des signaux de satellite et à fournir ainsi un signal reçu, au moins un des blocs à faible bruit recevant une pluralité de signaux de satellite ; et un module de traitement de signal de satellite comprenant : une pluralité de branches chacune étant disposée pour recevoir l'un correspondant des signaux reçus à partir de la pluralité de blocs à faible bruit, chaque branche comprenant un multiplieur disposé pour pondérer le signal reçu en le multipliant par un coefficient correspondant ; et un additionneur disposé pour ajouter les signaux pondérés de chaque branche pour produire un signal de satellite de sortie. Par exemple, le module de réception de satellite comprend une antenne, telle qu'une antenne parabolique, agencée pour recevoir des signaux satellite.

Selon un mode de réalisation, chacun des blocs à faible bruit est disposé pour recevoir une pluralité des signaux de satellite.

Selon un autre mode de réalisation, au moins deux des blocs à faible bruit sont agencés pour recevoir une pluralité de signaux de satellite et au moins un des blocs à faible bruit est agencé pour recevoir un signal de satellite unique.

Selon un autre mode de réalisation, le module de traitement de signal de satellite comprend un convertisseur analogique-numérique dans chaque branche, agencé pour convertir le signal de chacun des blocs à faible bruit en un signal numérique.

Selon un autre mode de réalisation, le module de traitement de signal de satellite comprend en outre un bloc de transformation de Fourier agencé pour transformer le signal numérique du convertisseur analogique-numérique dans le domaine fréquentiel, dans lequel la multiplication réalisée par le multiplieur et l'addition réalisée par l'additionneur sont réalisées dans le domaine fréquentiel, le module de réception de satellite comprenant en outre un bloc de transformation de Fourier inverse agencé pour reconvertir le signal de sortie en un signal dans le domaine temporel.

Selon un autre mode de réalisation, le multiplieur dans chaque branche est agencé pour multiplier le signal combiné correspondant par un coefficient déterminé en fonction du signal de satellite sélectionné.

Selon un autre mode de réalisation, le module de traitement de signal de satellite comprend en outre dans chaque branche un bloc de correction de phase agencé pour introduire un ajustement de phase sur le signal combiné correspondant.

Selon un autre mode de réalisation, le module de traitement de signal de satellite comprend au moins trois branches.

Selon un autre mode de réalisation, le module de réception de satellite comprend trois blocs à faible bruit, chacun étant disposé pour recevoir plusieurs signaux de satellite.

Selon un autre mode de réalisation, le module de réception de satellite a une entrée indiquant lequel des signaux de satellite doit être fourni par le module de réception de satellite en tant que signal de sortie de satellite.

Système de réception de satellite comprenant le module de réception de satellite ci-dessus, et un moyen de transmission agencé pour transmettre le signal de sortie en provenance du module de traitement de signal de satellite vers au moins un décodeur de satellite. En plus, le système de réception de satellite peut comprendre un ou plusieurs décodeurs agencés pour décoder une transmission vidéo du signal de sortie.

Selon un autre aspect de la présente invention, il est prévu un système de satellites comprenant au moins deux satellites séparés de 5 degrés de longitude ou moins, et le module de réception de satellite ci-dessus.

Selon un autre aspect de la présente invention, il est prévu un système de satellites comprenant au moins trois satellites dont chacun est séparé d'au moins l'un des deux autres de 5 degrés de longitude ou moins et le module de réception de satellite ci-dessous.

Selon un autre aspect de la présente invention, il est prévu un système de satellites comprenant au moins deux satellites en orbite géostationnaire séparés les uns des autres de moins de 6 degrés de longitude ; et un décodeur agencé pour recevoir un signal combiné comprenant des signaux de satellite en provenance de chacun des satellites ayant des bandes de fréquence se recouvrant au moins partiellement et pour extraire l'un des signaux de satellite du signal combiné.

Selon un autre aspect de la présente invention, il est prévu un procédé de réception d'une pluralité de signaux de satellite en provenance d'une pluralité de satellites comprenant : recevoir par chacun d'une pluralité de blocs à faible bruit un ou plusieurs de la pluralité de signaux de satellite, au moins l'un des blocs à faible bruit recevant une pluralité de signaux de satellite ; recevoir au moyen de chacune d'une pluralité de branches un signal correspondant en provenance de la pluralité de blocs à faible bruit et multiplier le signal par un coefficient correspondant pour pondérer chaque signal ; et additionner au moyen d'un additionneur les signaux pondérés de chaque branche pour produire un signal de satellite de sortie.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite ci-dessus, représente une partie d'un système de satellites ;
la figure 2 illustre un module de réception de satellite selon un mode de réalisation de la présente invention ;
la figure 3A illustre un positionnement de satellite basé sur le mode de réalisation de la figure 2 selon un mode de réalisation de la présente invention ;
les figures 3B et 3C illustrent l'intensité spatiale des signaux de satellite reçus par le module de réception de satellite de la figure 2 selon un mode de réalisation de la présente invention ;
la figure 4 représente un module de réception de satellite selon un autre mode de réalisation de la présente invention ;
la figure 5 représente un positionnement de satellite selon le mode de réalisation du module de réception de satellite de la figure 4 ; et
la figure 6 représente un système de réception de satellite selon un mode de réalisation de la présente invention.

### Description détaillée

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

La figure 2 représente un module de réception de satellite 200 comprenant des premier et second blocs LNB 202 et 204 et un module de traitement de signal de satellite 206 qui reçoit les signaux des blocs LNB 202 et 204 et combine ces signaux pour produire un signal correspondant à un signal de satellite "désiré". En particulier, comme cela sera exposé plus en détail ci-après, chacun des blocs LNB 202, 204 est adapté à recevoir au moins deux signaux de satellite différents en même temps, et, sur la base de l'émission qu'un utilisateur souhaite regarder, le module de traitement de signal de satellite 206 est adapté à extraire le signal de satellite correspondant des signaux reçus.

Le bloc LNB 202 comprend une tête de réception 208A qui est adaptée à recevoir en même temps plusieurs signaux de satellite dans une même bande de fréquence, chaque signal de satellite ayant la même polarisation, par exemple rectiligne (horizontale et verticale) ou circulaire (dans le sens des aiguilles d'une montre ou dans le sens inverse).

La sortie de la tête de réception 208A est fournie à un amplificateur à faible bruit 210A, qui introduit par exemple moins de 1 dB de bruit. La sortie de l'amplificateur 210A est fournie à un mélangeur 212A qui décale en fréquence les signaux de satellite dans une bande propre à être traitée par le module de traitement de satellite 206. Dans certains modes de réalisation, le signal de satellite est reçu sur une bande de fréquence de 10,4 à 12,7 GHz et le mélangeur 212A décale une partie de cette bande de fréquence vers une bande de base, par exemple la bande de 0 à 500 MHz, bien que d'autres bandes soient possibles. La fréquence de mélange correspondante est alors fournie au mélangeur 212A par un oscillateur local LO1.

Le bloc LNB 204 est par exemple identique au bloc LNB 202 et comprend une tête de réception 208B, un amplificateur 210B, un mélangeur 212B, et un oscillateur local LO1 fournissant la même fréquence de mélange que l'oscillateur local du mélangeur 212A. En outre, il est adapté à recevoir plusieurs signaux de satellite ayant la même polarisation et dans la même bande de fréquence que le bloc LNB 202. A titre de variante, le bloc LNB 204 pourrait être adapté à recevoir un signal de satellite de même polarisation que le bloc LNB 202, mais dans une bande de fréquence légèrement différente, par exemple une bande de fréquence qui recouvre au moins partiellement la bande de fréquence du signal reçu par le bloc LNB 202.

Les sorties des mélangeurs 212A et 212B des blocs LNB 202, 204 sont fournies au module de traitement de signal de satellite 206 et en particulier à des branches respectives A et B. Le signal du bloc LNB 202 est fourni à la branche A comprenant un amplificateur variable 214A, un convertisseur analogique-numérique (ADC) 216A, un bloc de transformation de Fourier rapide (FFT) 218A, un bloc de correction de phase 220A et un multiplieur 222A. Le signal en provenance du bloc LNB 204 est fourni à la branche B comprenant un amplificateur variable 214B, un convertisseur analogique-numérique 216B, un bloc FFT 218B, un bloc de correction de phase 220B et un multiplieur 222B.

Les amplificateurs variables 214A, 214B amplifient par exemple les signaux à un niveau approprié pour les introduire dans les convertisseurs analogique-numérique 216A, 216B.

Les convertisseurs analogique-numérique 216A, 216B échantillonnent alors les signaux, par exemple à une fréquence d'échantillonnage voisine de 1 GHz. Les blocs convertisseurs 216A, 216B produisent par exemple des échantillons d'une longueur de 8 à 12 bits.

Les sorties des convertisseurs 216A, 216B sont fournies aux blocs FFT respectifs 218A, 218B qui transforment les signaux numériques du domaine temporel au domaine fréquentiel. Un remplissage de zéros est par exemple appliqué aux échantillons avant la transformation de Fourier. Pour appliquer l'opération FFT, les échantillons sont traités par blocs de, par exemple, 1024 ou 2048 échantillons. L'opération de transformation de Fourier rapide fournit des blocs de valeurs de fréquence, chaque bloc comprenant par exemple 1024 valeurs de 8 à 12 bits.

Des corrections de phase φ0 et φ1 sont alors appliquées par des blocs de correction de phase respectifs 220A et 220B, permettant une certaine compensation des trajets de transmission des signaux de satellite. Bien que cela ne soit pas représenté en figure 2, les signaux de chaque branche A et B ont des composantes complexes (I et Q) et chaque valeur peut donc être représentée sous la forme a+bj. Une correction de phase est appliquée dans le domaine fréquentiel par multiplication de chaque valeur par la valeur complexe correspondante φ0, φ1.

Les signaux corrigés en phase des blocs 220A, 220B sont fournis à des multiplieurs respectifs 222A et 222B qui multiplient les signaux par des coefficients correspondant C0 et C1, respectivement. La multiplication par les multiplieurs 222A et 222B est par exemple appliquée séquentiellement aux échantillons. Les valeurs des coefficients C0 et C1 dépendront du signal de satellite qui doit être reçu. Cette multiplication a pour effet de donner aux signaux reçus de chaque bloc LNB 202, 204 un poids et une phase différents. A nouveau, les coefficients C0 et C1 ont une forme complexe a+bj. Dans certaines réalisations, les blocs de correction de phase 220A, 220B et les multiplieurs 222A, 222B sont combinés en un bloc unique qui réalise une multiplication unique pour réaliser la correction de phase et la pondération. Par exemple, dans les branches A et B, des multiplications uniques pourraient être réalisées sur la base de coefficients respectifs C'0 = C0*φ0 et C'1 = C1*φ1.

Il sera clair pour l'homme de l'art que les valeurs de correction de phase φ0, φ1 et les coefficients C0, C1 dépendront du positionnement des satellites et du système d'antenne. Dans certains modes de réalisation, ces valeurs peuvent être programmées dans une table pour un groupe de satellites particulier observé par un pays et une région particulière. A titre de variante, ces valeurs pourraient être déterminées pendant une phase de mise en route, par exemple en analysant les valeurs de φ0, φ1, C0, C1 dans des plages données pour obtenir une combinaison appropriée correspondant à chaque signal de satellite.

Les signaux dans le domaine fréquentiel en provenance des deux branches sont alors combinés. En particulier, des échantillons correspondants des signaux pondérés en provenance des multiplieurs 222A, 222B sont ajoutés bit par bit par l'additionneur 224.

Le résultat de cette addition est fourni à un bloc de FFT inverse qui reconvertit les signaux du domaine fréquentiel au domaine temporel. Le signal dans le domaine temporel est alors fourni à un convertisseur numérique-analogique 228 qui convertit le signal numérique en un signal analogique adapté à être émis sur un câble coaxial 230. A titre de variante, le signal de satellite pourrait être émis par une communication par une ligne d'alimentation, c'est-à-dire que les signaux de données sont transmis par un conducteur habituellement utilisé pour la transmission de l'alimentation dans un immeuble. Ainsi, plutôt que d'être un câble coaxial, le câble 230 pourrait être une ligne d'alimentation. En outre, dans des variantes de réalisation, le signal de satellite pourrait être transmis par une interface sans fil telle qu'une connexion Wifi.

Un bloc de commande 232 reçoit un signal de sélection sur une ligne d'entrée 234, indiquant le signal de satellite que l'utilisateur désire observer. Ce signal de sélection est par exemple fourni par l'intermédiaire du câble 230, ou à titre de variante par d'autres moyens, par exemple par une connexion sans fil ou un commutateur d'un côté du module de réception. En fonction du signal de satellite désiré, le bloc de commande 232 produit, par exemple à partir d'une table, les valeurs des coefficients C0 et C1 pour les multiplieurs 222A, 222B et les valeurs de correction de phase pour les blocs de correction de phase 220A et 220B. Les mêmes coefficients C0 et C1 et les mêmes valeurs de correction de phase sont par exemple valides pour la réception d'un signal de satellite donné.

Le fonctionnement des modules de réception de satellite de la figure 2 va maintenant être décrit plus en détail en faisant référence aux figures 3A à 3C.

La figure 3A représente les blocs LNB 202 et 204 ayant chacun des zones de réception délimitées par un lobe correspondant 302, 304. En d'autres termes, les signaux de satellite émis par le satellite dans les zones respectives peuvent être reçus par le bloc LNB correspondant 202, 204.

Dans l'exemple de la figure 3A, trois satellites 306, 308 et 310 sont présents, chacun étant séparé du suivant d'un angle β qui est par exemple dans la plage de 2 à 5 degrés de longitude. Par exemple, les satellites 306 et 310 sont disposés à 6 degrés de longitude d'écart, de façon similaire aux satellites 102 et 104 de la figure 1, tandis qu'un satellite supplémentaire 308 est placé entre ces deux satellites.

Le bloc LNB 202 est par exemple dirigé vers un emplacement 312 environ aux deux tiers de la distance entre les satellites 308 et 306 alors que le bloc LNB 204 est par exemple dirigé vers un emplacement 314 sensiblement aux deux tiers de la distance du satellite 308 au satellite 310. La zone de réception 302 du bloc LNB 202 recouvre les deux satellites 306 et 308 et ainsi des signaux de ces deux satellites sont reçus en même temps par le bloc LNB 202. La zone de réception 304 du bloc LNB 204 recouvre les deux satellites 308 et 310 et donc les signaux de ces deux satellites sont toujours reçus en même temps par le bloc LNB 204. Par contre, le signal du satellite 306 n'est pas reçu par le bloc LNB 204 et le signal du satellite 310 n'est pas reçu par le bloc LNB 202, ce satellite étant en dehors des zones de réception respectives.

La figure 3B illustre l'intensité angulaire des signaux S1, S2 et S3 en provenance des satellites 302, 304 et 306 respectivement au niveau des blocs LNB 202, 204. Comme cela est représenté, il y a un recouvrement entre ces signaux en raison de la proximité des satellites.

La figure 3C représente les signaux après que la fonction de pondération a été appliquée par le module de traitement de signal de satellite 206 de la figure 2, de sorte que le signal S2 en provenance du satellite 308 est extrait. Ceci implique par exemple d'appliquer des coefficients de pondération aux signaux en provenance de chacun des blocs LNB 202 et 204 en utilisant les coefficients CO=0, 5+0j et C1=0,5+0j, et en additionnant ces signaux au moyen de l'additionneur 224 de sorte que les parties de signaux communes aux deux signaux sont renforcées par l'addition tandis que les parties correspondantes 302 et 306 sont proportionnellement réduites, comme cela est illustré en figure 3C.

A titre de variante, en supposant que le signal de satellite S1 en provenance du satellite 306 est le signal de satellite désiré, une pondération de 1 est appliqué au signal en provenance du bloc LNB 202 en appliquant un coefficient C0=1+0j, alors qu'un déphasage de π radians et une pondération de 50 % sont appliqués au signal en provenance du bloc LNB 204 en appliquant un coefficient C1=-0,5j. Quand les deux signaux pondérés sont par la suite ajoutés, le signal de satellite S2 reçu par le bloc LNB 204 s'annulera avec une partie provenant du satellite 308 reçu par le bloc LNB 202 et le signal du satellite 310 reçu par le bloc LNB 204 sera réduit de 50 %. Ainsi, le signal en provenance du satellite 306 sera favorisé. De façon similaire, si le signal S3 du satellite 310 doit être reçu, les coefficients C0=0,5j et C1=-1+0j seront appliqués.

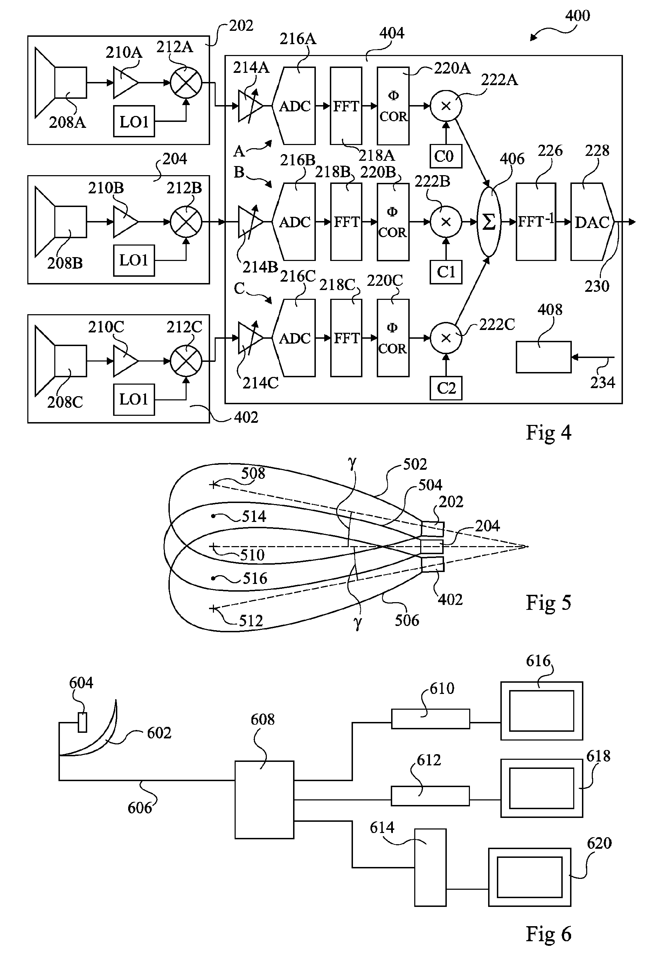

La figure 4 représente un module de réception 400 selon une variante de réalisation comprenant des blocs LNB 202 et 204 qui sont identiques à ceux de la figure 2 et ne seront pas décrits à nouveau en détail, et en outre un bloc LNB 402. Le bloc LNB 402 est par exemple identique aux blocs LNB 202 et 204 et comprend une tête de réception 208C, un amplificateur à faible bruit 210C, un mélangeur 212C et un oscillateur local LO1. Le bloc LNB 402 reçoit un signal de satellite de même polarisation que les blocs LNB 202, 204. La bande de fréquence reçue par le bloc LNB 402 sera la même que la bande de fréquence reçue par l'un des blocs LNB 202, 204 ou les deux, ou bien une bande de fréquence au moins partiellement en recouvrement de chacune de ces bandes de fréquence.

Le module de traitement de satellite 404 est similaire au module de traitement de satellite 206 de la figure 2 mais, en plus des branches A et B, il comprend une branche supplémentaire C pour traiter le signal du bloc LNB 402. La branche C comprend un amplificateur variable 214C, un convertisseur analogique-numérique 216C, un bloc FFT 218C, un bloc de correction de phase 220C et un multiplieur 222C. Le bloc de correction de phase 220C applique une correction de phase φ2 au signal reçu par le bloc LNB 402 et le multiplieur 222C multiplie le signal corrigé en phase par un coefficient C2. Bien que le bloc de correction de phase 220C et le multiplieur 222C soient représentés sous forme de blocs séparés, ces blocs pourraient être combinés en un bloc unique réalisant une unique opération de multiplication pour la correction de phase et la pondération, sur la base d'un coefficient C'2=C2*φ2.

Le module de traitement de satellite 404 comprend un additionneur 406 qui ajoute les signaux en provenance de chacun des multiplieurs 222A, 222B et 222C. Comme pour le bloc 206 de la figure 2, un bloc de transformation de Fourier rapide inverse 226 et un convertisseur numérique-analogique 228 sont prévus après l'additionneur et fournissent le signal de satellite sélectionné sur le câble de sortie 230.

Le module de traitement de satellite 404 comprend également un bloc de commande 408 qui est similaire au bloc de commande 242 de la figure 2 mais fournit en outre une valeur de correction de phase au bloc 220C et un coefficient C2 au multiplieur 222C.

Le fonctionnement du module de réception de satellite 400 de la figure 4 va maintenant être décrit en se référant à la figure 5.

La figure 5 représente les blocs LNB 202, 204 et 402 dont chacun a une zone de réception délimitée par des lobes 502, 504 et 506, respectivement. Dans ce mode de réalisation, il y a trois satellites 508, 510 et 512 en orbite géostationnaire. Le bloc LNB 202 vise par exemple un point 514 à mi-chemin entre les satellites 508 et 510 alors que le bloc LNB 402 vise par exemple un point 516 à mi-chemin entre les satellites 510 et 512. Le bloc LNB 204 vise par exemple directement le satellite 510.

Les satellites 508, 510 et 512 sont par exemple séparés les uns des autres d'un angle γ qui est par exemple dans la plage de 1 à 5 degrés.

Dans ce mode de réalisation, comme le bloc LNB central 204 reçoit seulement, ou essentiellement, le signal du satellite 510, la phase de ce signal peut être inversée pour aider à la réception des signaux de satellite 508 et 512. Ainsi, pour recevoir un signal S1 du satellite 508, des coefficients C0=1+0j, C1=0,3j et C2=0 sont par exemple utilisés pour des signaux des blocs LNB 202, 204 et 402, respectivement. A titre de variante, pour recevoir un signal S2 du satellite 510, des coefficients sont par exemple C0=0,5, C1=1+j et C2=0,5j, alors que pour recevoir un signal S3 du satellite 512, les coefficients sont par exemple C0=0, C1=0,3j et C2=1+0j.

La figure 6 illustre un système de réception de satellite 600 comprenant une antenne parabolique 602 ayant un module de réception 604 monté en son point focal, et une interface de transmission 606 couplant le module de réception 602 à un bloc de distribution interne 608. Le module de réception 604 correspond par exemple au module de réception 200 ou 400 décrit précédemment. Le bloc de distribution interne 608 fournit par exemple une certaine amplification et partage le signal de satellite vers des décodeurs de satellite 610, 612 et 614 dont chacun est associé à l'affichage correspondant 616, 618 et 620. Les décodeurs de satellite 610 et 612 sont par exemple des décodeurs dédiés, alors que le décodeur de satellite 614 est par exemple un ordinateur ou analogue. L'interface de transmission 606 correspond au câble de transmission 230 des figures 2 et 4, ou à une interface sans fil.

Les divers décodeurs 610, 612 et 614 reçoivent un même signal reçu d'un satellite donné. Dans certains modes de réalisation, le satellite à partir duquel ce signal est reçu peut être changé périodiquement, en fonction des canaux que des utilisateurs souhaitent observer. A titre de variante, les utilisateurs ont un contrat pour recevoir des signaux de satellite d'un seul des satellites et un module de réception capable de recevoir un signal provenant d'un satellite quelconque pourrait être "accordé" pendant l'installation sur le satellite sélectionné par l'utilisateur.

Un avantage du mode de réalisation décrit ici est que les signaux en provenance de plusieurs blocs LNB, dont chacun reçoit les signaux de satellite de plusieurs satellites, sont traités de façon simple pour extraire un signal de satellite unique transmis par un satellite unique. Ceci est obtenu en multipliant les signaux reçus par chaque bloc LNB par un coefficient différent, pour pondérer de façon différente les signaux puis ajouter les signaux ensemble. De façon avantageuse, ceci permet aux satellites d'être séparés d'une distance qui correspond à moins de 6 degrés de longitude, par exemple entre 1 et 5 degrés de longitude.

De façon avantageuse, dans certains modes de réalisation, les signaux de satellite sont convertis en signaux numériques dans le domaine de fréquences à traiter, ce qui permet aux signaux d'être traités avec une précision relativement élevée.

Alors qu'on a décrit au moins un mode de réalisation illustratif de l'invention, diverses variantes, modifications et perfectionnement apparaîtront à l'homme de l'art.

Par exemple, il sera clair pour l'homme de l'art que, bien que des modes de réalisation à trois satellites aient été décrits, l'invention peut s'appliquer à des systèmes à seulement deux satellites disposés près l'un de l'autre, par exemple à moins de 6 degrés ou entre 2 et 5 degrés les uns des autres en longitude, dans lesquels au moins l'un des blocs LNB reçoit le signal de satellite de deux satellites. En outre, les modes de réalisation décrits ici pourraient s'étendre à des systèmes à quatre satellites ou plus et à trois blocs LNB ou plus.

En outre, il sera clair pour l'homme de l'art que l'ordre des fonctions réalisées dans les modules de traitement de signal de satellite 206, 404 pourrait être modifié. Par exemple, plutôt que d'ajouter des signaux en provenance des branches avant de réaliser la FFT inverse, l'addition par les additionneurs 224, 406 pourrait être réalisée après qu'une FFT inverse est appliquée à chaque branche. Dans ce cas, chaque branche A et B, et la branche C dans le mode de réalisation de la figure 4, comprend un bloc de FFT inverse respective, et par exemple également un convertisseur numérique-analogique respectif, l'addition des signaux étant effectuée en analogique. En outre la multiplication par les coefficients C0 et C1 et dans le cas du module 406 C2 pourrait être réalisée avant les FFT 216 de chaque branche, ou entre les FFT 216 et les blocs de correction de phase 220 de chaque branche.

En outre, il sera clair pour l'homme de l'art que l'orientation des blocs LNB pourrait être différente, selon la combinaison particulière blocs LNB/satellites.

## Revendications

1. Module de réception de satellite pour recevoir une pluralité de signaux de satellite d'une pluralité de satellites, le module de réception de satellite comprenant :
une pluralité de blocs à faible bruit (202, 204, 402) chacun étant destiné à recevoir un ou plusieurs des signaux de satellite et à fournir ainsi un signal reçu, au moins un des blocs à faible bruit recevant une pluralité de signaux de satellite ; et
un module de traitement de signal de satellite (206, 404) comprenant :
une pluralité de branches (A, B, C) chacune étant disposée pour recevoir l'un correspondant des signaux reçus à partir de la pluralité de blocs à faible bruit, chaque branche comprenant un multiplieur (222A, 222B, 222C) disposé pour pondérer le signal reçu en le multipliant par un coefficient correspondant (C0, C1, C2) ; et
un additionneur (224, 406) disposé pour ajouter les signaux pondérés de chaque branche pour produire un signal de satellite de sortie.

2. Module de réception de satellite selon la revendication 1, dans lequel chacun des blocs à faible bruit est disposé pour recevoir une pluralité des signaux de satellite.

3. Module de réception de satellite selon la revendication 1, dans lequel au moins deux des blocs à faible bruit sont agencés pour recevoir une pluralité de signaux de satellite et au moins un des blocs à faible bruit est agencé pour recevoir un signal de satellite unique.

4. Module de réception de satellite selon l'une quelconque des revendications 1 à 3, dans lequel le module de traitement de signal de satellite (206, 404) comprend un convertisseur analogique-numérique (216A, 216B, 216C) dans chaque branche, agencé pour convertir le signal de chacun des blocs à faible bruit en un signal numérique.

5. Module de réception de satellite selon la revendication 4, dans lequel le module de traitement de signal de satellite (206, 404) comprend en outre un bloc de transformation de Fourier (218A, 218B, 218C) agencé pour transformer le signal numérique du convertisseur analogique-numérique dans le domaine fréquentiel, dans lequel la multiplication réalisée par le multiplieur et l'addition réalisée par l'additionneur sont réalisées dans le domaine fréquentiel, le module de réception de satellite comprenant en outre un bloc de transformation de Fourier inverse (226) agencé pour reconvertir le signal de sortie en un signal dans le domaine temporel.

6. Module de réception de satellite selon l'une quelconque des revendications 1 à 5, dans lequel le multiplieur (222A, 222B, 222C) dans chaque branche est agencé pour multiplier le signal combiné correspondant par un coefficient déterminé en fonction du signal de satellite sélectionné.

7. Module de réception de satellite selon l'une quelconque des revendications 1 à 6, dans lequel le module de traitement de signal de satellite (206, 404) comprend en outre dans chaque branche un bloc de correction de phase (220A, 220B, 220C) agencé pour introduire un ajustement de phase sur le signal combiné correspondant.

8. Module de réception de satellite selon l'une quelconque des revendications 1 à 7, dans lequel le module de traitement de signal de satellite (206, 404) comprend au moins trois branches (A, B, C).

9. Module de réception de satellite selon l'une quelconque des revendications 1 à 8, comprenant trois blocs à faible bruit, chacun étant disposé pour recevoir plusieurs signaux de satellite.

10. Module de réception de satellite selon l'une quelconque des revendications 1 à 9, ayant une entrée (234) indiquant lequel des signaux de satellite doit être fourni par le module de réception de satellite en tant que signal de sortie de satellite.

11. Système de réception de satellite comprenant le module de réception de satellite selon l'une quelconque des revendications 1 à 10, et un moyen de transmission (230) agencé pour transmettre le signal de sortie en provenance du module de traitement de signal de satellite vers au moins un décodeur de satellite (610, 612, 620).

12. Système de satellites comprenant au moins deux satellites séparés de 5 degrés de longitude ou moins, et le module de réception de satellite selon l'une quelconque des revendications 1 à 10.

13. Système de satellites comprenant au moins trois satellites dont chacun est séparé d'au moins l'un des deux autres de 5 degrés de longitude ou moins et le module de réception de satellite selon l'une quelconque des revendications 1 à 10.

14. Système de satellites comprenant :
au moins deux satellites en orbite géostationnaire séparés les uns des autres de moins de 6 degrés de longitude ; et
un décodeur agencé pour recevoir un signal combiné comprenant des signaux de satellite en provenance de chacun des satellites ayant des bandes de fréquence se recouvrant au moins partiellement et pour extraire l'un des signaux de satellite du signal combiné.

15. Procédé de réception d'une pluralité de signaux de satellite en provenance d'une pluralité de satellites comprenant :
recevoir par chacun d'une pluralité de blocs à faible bruit (202, 204, 402) un ou plusieurs de la pluralité de signaux de satellite, au moins l'un des blocs à faible bruit recevant une pluralité de signaux de satellite ;
recevoir au moyen de chacune d'une pluralité de branches (A, B, C) un signal correspondant en provenance de la pluralité de blocs à faible bruit et multiplier le signal par un coefficient correspondant (C0, C1, C2) pour pondérer chaque signal ; et
additionner au moyen d'un additionneur (224, 406) les signaux pondérés de chaque branche pour produire un signal de satellite de sortie.
